# EUROPÄISCHE PATENTSCHRIFT

(11) **EP 2 407 019 B1**
(45) Veröffentlichungstag und Bekanntmachung des Hinweises auf die Patenterteilung: **27.08.2014**
(21) Anmeldenummer: 11172182.5
(22) Anmeldetag: 30.06.2011
(51) Int. Cl.: A01D 34/13

(54) **Schneidwerk für eine Erntemaschine**
Cutting assembly for an agricultural harvester
Barre de coupe pour une moissonneuse

(30) Priorität: 12.07.2010 DE 102010036342
(43) Veröffentlichungstag der Anmeldung: 18.01.2012
(73) Patentinhaber: Martin Ziegler GmbH & Co. KG, 86554 Pöttmes (DE)
(72) Erfinder: Coenen, Karl, 53721 Siegburg (DE); Bauer, Daniel, 53804 Much (DE); Elsen, Manfred, 45608 Bleialf (DE); Daferner, Gerhard, 86554 Pöttmes (DE); Frinzl, Richard, 86529 Schrobenhausen (DE)
(74) Vertreter: Charrier, Rapp & Liebau

(56) Entgegenhaltungen:
- BE-A- 464 674
- DE-A1- 3 324 025
- US-A- 2 155 182
- US-A- 4 008 556

## Beschreibung

Die Erfindung betrifft ein Schneidwerk für eine Erntemaschine nach dem Oberbegriff des Anspruchs 1.

Aus der DE 196 51 098 A1 ist ein Rapstrennschneidwerk bekannt, bei dem ein Trennerhalter vorgesehen ist, an dem zwei mit Messern versehene Messerführungen relativ zueinander beweglich geführt sind. Der Trennerhalter weist mehrere Führungshalter zum Führen der Messerführungen auf, wobei der Trennerhalter einstückig ausgebildet ist und ein Oberteil und ein Unterteil aufweist. Mit dem Ober- und dem Unterteil sind jeweils vier Führungshalter einstückig verbunden, wobei die Messerführungen zwischen zwei gegenüberliegenden Führungshaltern verlaufen. Zwischen Führungshalter und Messerführung sind jeweils Führungen aus Kunststoff vorgesehen, in welcher die Messerführungen gleiten. Um die Kunststoffführungen mit den Führungshaltern zu verspannen, sind in gegenüberliegenden Führungshaltern Bohrungen im Ober- und Unterteil vorgesehen, durch welche Schraubbolzen mit einer Mutter verschraubt werden. Hierdurch wird der Trennerhalter sehr robust und steif. Der Trennerhalter selbst wird durch im Ober- und Unterteil einseitig vorgesehene Bohrungen über Bolzen an einer Erntemaschine befestigt. Eine entsprechende Befestigung geht aus der DE 31 19 938 A1 oder DE 33 25 194 A1 hervor.

Nachteilig bei dem bekannten Schneidwerk ist, dass durch dessen starre und steife Ausbildung und die starre Befestigung an der Erntemaschine im Betrieb entstehende Schwingungen, beispielsweise durch die Bewegung der Schneidmesser, unmittelbar auf die Teile des Schneidwerks, die Befestigungselemente und die betreffenden Teile der Erntemaschine übertragen werden. Die hierdurch erzeugten ständigen Erschütterungen führen zu einer starken Beanspruchung dieser Teile und führen relativ bald zu Beschädigungen bis hin zum Abreißen oder Abrechen der Teile.

Die US 4 008 556 A offenbart eine Erntemaschine mit einem Schneidwerk mit einem Messer, das über ein Stützelement und eine Befestigungsstruktur an der Erntemaschine befestigt ist. Dort sind elastische Befestigungen vorgesehen, welche zwischen sich große, U-förmige plattenähnliche Verbindungselement tragen. Die Befestigungsstrukturen dienen zwar zur Absorption von Schwingungen, weisen jedoch den Nachteil eines großen und komplizierten Aufbaus auf. Zudem kann die dortige Befestigungsstruktur nur Schwingungen in Längsrichtung des Messers absorbieren, während es in Richtungen quer dazu sehr steif ist.

Die DE 25 52 626 A1 offenbart einen Mähbalken mit einer Hohlschiene, die einen länglichen Kanal ausbildet und einen leistenförmigen Fortsatz und daran angeordnete Gegenmesser aufweist. Die zugehörigen Schermesser sind an einem Schwingarm angeordnet, welcher sich von einer Antriebswelle kommend durch eine Ausnehmung der Hohlschiene erstreckt. Ein schwingungsdämpfendes Element ist dort nicht offenbart.

Die US 2 637 158 A offenbart einen hohlförmigen, längsovalförmigen Messerrücken mit daran angeordneten Messerführungen. Durch die Ausbildung des dortigen Messerrückens wird ein steiferer Messerrücken bereitgestellt, welcher sich durch Vibrationen weniger leicht lockert. Durch die robustere Ausführung und höhere Steifigkeit des Messerrückens verschlechtert sich die Schwingungsdämpfung.

Die US 3 136 109 A offenbart einen Messerrücken mit einem hohlförmigen, polygonal geformten geschlossenen Stützrücken, der sich aus mehreren Streiten zusammensetzt. Der dortige Messerrücken ist steif und verbiegungsfrei, so dass er keine schwingungsdämpfenden Eigenschaften aufweist, sondern Vibrationen gut überträgt.

Die US 4 446 683 A offenbart einen Messerantrieb mit einem Schneidwerk, an dem mittels eines Vorderrahmenelements ein Messer ohne jeden Schwingungsdämpfer fest angeordnet ist.

Die US 2 155 182 A betrifft ein Mähwerk mit an einem Messerrücken angeordneten Schneidmessern, wobei der Messerrücken über eine Halterung an einer Erntemaschine befestigt ist. Dabei ist eine Spiralfeder zwischen Messerrücken und Halterung vorgesehen, welche eine Schwingung zwischen Messerrücken und Halterung erlaubt. Ein Element, welches diese Schwingungen effektiv bedämpft, also Schwingungsenergie absorbiert, ist dort nicht vorgesehen.

Die DE 33 24 025 A1 offenbart ein Messerbalkenmähwerk, der zur Verbindung mit einem Fahrzeug ein Gestell aufweist, welches die auf das Messerbalkenmähwerk wirkenden äußeren Kräfte aufnimmt. An einem Ende ist das Gestell als bügelformiges Scharnier mit daran fest verbundenen Lagerzapfen ausgebildet. Ein Mähbalken ist einerends fest mit einem inneren Schuh und an seinem äußeren Ende mit einem äußeren Schuh verbunden, wobei der innere Schuh einen vorderen und einen hinteren Lagerbock hat.. Die Lagerböcke haben elastische Ausfütterungen, die von den Lagerzapfen durchsetzt werden. Die nachgiebige Lagerung des inneren Schuhes in den elastischen Ausfütterungen ermöglicht, dass der Mähbalken Querschwingungen mit kleiner Amplitude ausführt, wodurch die als Gegenschneiden ausgebildeten Finger leicht in stehendes oder liegendes Gras eindringen können, Verstopfungen vermieden werden können und auch lose Fremdkörper wie Steine, so ausgestoßen werden, dass sie nicht zwischen Fingern und Messerklingen eingeklemmt werden. Diese Ausführung wirkt zwar als Schwingungsdämpfer, ist aber konstruktiv aufwendig und erfordert regelmäßig Wartung und Austausch der elastischen Ausfütterungen, da diese im Laufe der Zeit abgenutzt werden und ihre elastischen Eigenschaften verlieren.

Der Erfindung liegt deshalb die Aufgabe zugrunde, ein Schneidwerk zu schaffen, welches die oben genannten Nachteile überwindet und einen möglichst lange beschädigungs- und wartungsfreien Einsatz des Schneidwerks ermöglicht.

Gelöst wird diese Aufgabe durch ein Schneidwerk mit den Merkmalen des Anspruchs 1. Vorteilhafte Ausgestaltungen und bevorzugte Weiterbildungen der Erfindung können den abhängigen Ansprüchen entnommen werden.

Das eingangs genannte Schneidwerk für eine Erntemaschine ist erfindungsgemäß dadurch gekennzeichnet, dass zwischen Messerrücken und Befestigungselement ein Schwingungsdämpfer vorgesehen ist, der aus einem länglichen, im wesentlichen parallel zum Messerrücken verlaufenden Hohlprofil besteht, wobei das Hohlprofil zumindest bereichsweise längsseitig offen ist. Hierdurch werden vor allem durch die Schneidmesser verursachte Schwingungen bedämpft und Beschädigungen und die frühzeitige Alterung von Bauteilen des Schneidwerks oder auch der Erntemaschine sicher verhindert.

In einer fertigungstechnisch vorteilhaften Ausführung des Schneidwerks können der Messerrücken und der Schwingungsdämpfer einteilig ausgebildet sein.

Das Hohlprofil kann hierbei vorteilhaft einen polygonalen, ovalen oder kreisringförmigen Querschnitt haben.

Weiter kann das Hohlprofil vorteilhaft einen C-förmigen oder U-förmigen Querschnitt haben, wobei diese ihrerseits polygonal ausgeformt sein können. Vorteilhaft kann das Hohlprofil einen ersten Schenkel und einen zweiten Schenkel aufweisen, wobei nur einer der Schenkel mit dem Messerrücken verbunden ist. Der andere Schenkel kann dann frei schwingen, wodurch eine verbesserte Schwingungsdämpfung erreicht wird.

Das Befestigungselement kann vorteilhaft ein Tragrohr, ein Anschlussflansch oder ein Lochblech sein. Alternativ kann das Befestigungselement auch vorteilhaft aus einer im Schwingungsdämpfer vorgesehenen Ausnehmung gebildet sein

In einer sicherheitstechnisch vorteilhaften Ausführung kann der Schwingungsdämpfer als Kabelkanal zur Aufnahme von Versorgungsleitungen eines am Schneidwerk angebrachten Messerantriebs ausgebildet sein.

Vorteilhaft können über die Länge des Messerrückens mehrere Messerhalter angebracht sein, wobei der Messerrücken einen stufenförmig abgewinkelten Bereich und die daran angebrachten Messerhalter am Messerrücken angeschlagene gegenläufig gestufte Klemmbleche aufweisen. In einer vorteilhaften Weiterbildung dieser Ausführung kann zur definierten Spannung der Schneidmesser gegeneinander jeweils eine durch eine Bohrung im Klemmblech und Messerrücken reichende Spannverschraubung vorgesehen sein. Weiter können am vorderen Ende der Klemmbleche jeweils eine Kunststoffführung als Gleitführung für eine Messerleiste des oberen Schneidmessers und/oder am Messerrücken Kunststoffführungen als Gleitführung für eine Messerleiste des unteren Schneidmessers angebracht sein.

Weitere Besonderheiten und Vorzüge der Erfindung ergeben sich aus der folgenden Beschreibung eines bevorzugten Ausführungsbeispiels anhand der begleitenden Zeichnungen. Diese zeigen;
- **Fig. 1**: eine schematische dreidimensionale Darstellung eines erfindungsgemäßen Schneidwerks;
- Fig.3: eine schematische dreidimensionale Ansicht eines Antriebsbereichs des Schneidwerks aus Fig. 1.

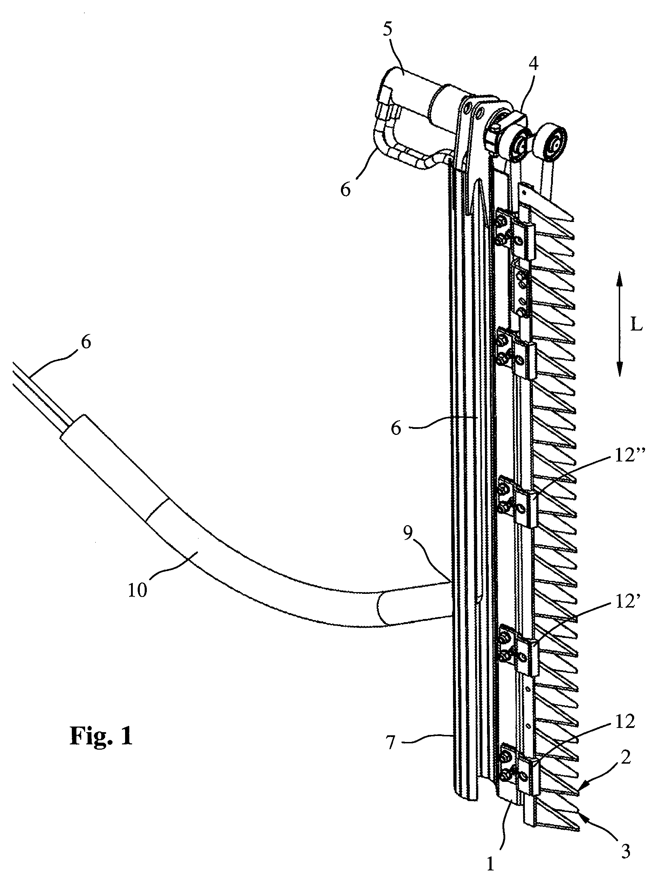

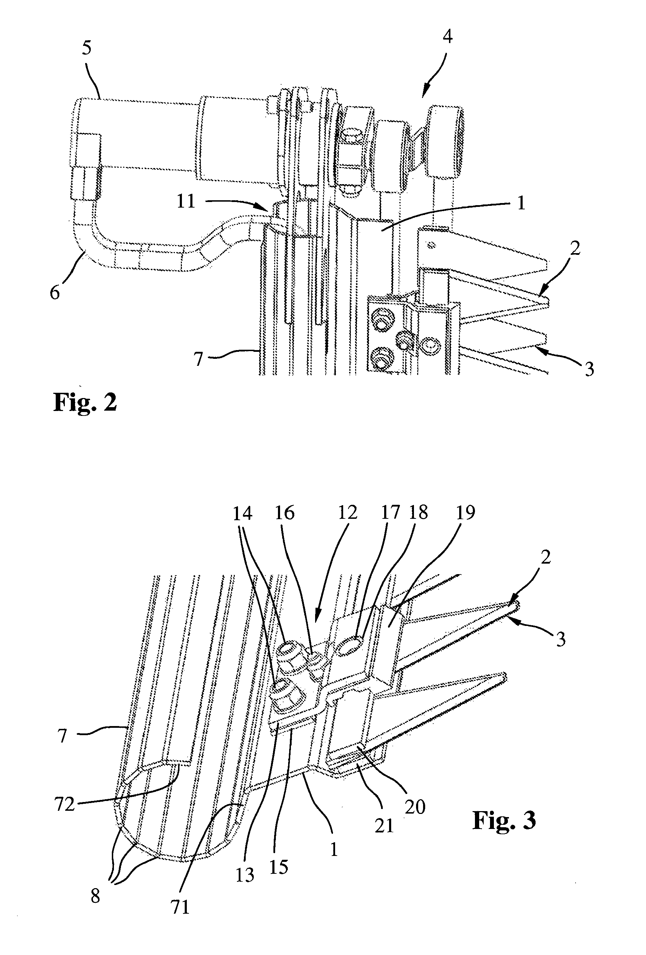

- Fig. 3: eine schematische dreidimensionale Ansicht eines freien Endes des Schneidwerks aus Fig. 1.

Ein in Fig. 1 gezeigtes erfindungsgemäßes Schneidwerk weist einen länglichen Messerrücken 1 auf, an dem ein oberes Schneidmesser 2 und ein unteres Schneidmesser 3 in einer Längsrichtung L des Messerrückens 1 beweglich antreibbar gelagert sind. Angetrieben werden die Schneidmesser 2, 3 in bekannter Weise über eine Hebelgetriebe 4 durch einen vorliegend als Hydraulikmotor 5 ausgebildeten Messerantrieb. Der Hydraulikmotor 5 wird über Versorgungsleitungen 6 von der nicht gezeigten Erntemaschine, z.B. ein Mähdrescher, mit unter Druck stehender Hydraulikflüssigkeit versorgt und angesteuert. Um den Weg der Versorgungsleitungen 6 im Schneidwerk besser nachvollziehen zu können, sind sie in Fig. 1 mehrfach mit der gleichen Bezugsziffer versehen.

Anstelle des Hydraulikmotors kann auch ein Elektromotor als Messerantrieb 4 und statt des Hebelgetriebes 4 auch ein anderes Übertragungselement, z.B. ein Exzentergetriebe bei einem Elektromotor, verwendet werden.

Wie in Fig. 3 besonders gut erkennbar, ist auf der den Schneidmessern 2, 3 abgewandten Längsseite des Messerrückens 1 ein als Hohlprofil ausgebildeter, im Querschnitt C-förmiger, polygonaler Schwingungsdämpfer 7 vorgesehen. Der Schwingungsdämpfer 7 verläuft hierbei im wesentlichen parallel zur Längsrichtung L des Messerrückens 1 und ist mit diesem einteilig aus einem vorzugsweise hochfesten Metallblech mit einem Gesamtquerschnitt ähnlich einem Fragezeichen hergestellt.

Bevorzugt ist der Schwingungsdämpfer 7 im sog. Pilgerschrittverfahren hergestellt. Durch exemplarisch bezeichnete Längskanten 8 des Schwingungsdämpfers 7 ist dieser vorteilhaft sehr verwindungssteif.

Wie in Fig. 1 dargestellt, ist der Schwingungsdämpfer 7 an einer Anschlussstelle 9 mit einem vorliegend als Tragrohr 10 ausgebildeten Befestigungselement verbunden. Das Tragrohr 10 wird dann in an sich bekannter Weise an der Erntemaschine befestigt. Anstelle des Tragrohrs 10 kann das Befestigungselement auch anders ausgebildet sein, beispielsweise als Flansch, Lochblech oder auch als Bohrung im Schwingungsdämpfer 7. Vorzugsweise ist die Stelle 9 entfernt vom Messerrücken 1 am Schwingungsdämpfer angeordnet.

Der Schwingungsdämpfers 7, der einerseits mit einem ersten Schenkel 71 mit dem Messerrücken 1 verbunden ist und andererseits einen im Querschnitt freien Schenkel 72 aufweist, dämpft die von den oszillierend aneinander vorbeigleitenden Schneidmesser 2 und 3 herrührenden Schwingungen stark ab. Hierdurch kann eine baldige Materialermüdung des Tragrohrs 10, der Anschlussstelle 9 oder auch anderer mit dem Schneidwerk verbundener Teile der Erntemaschine oder des Schneidwerks vermieden werden.

Der Schwingungsdämpfers 7 kann anstelle des polygonalen, C-förmigen Querschnitts auch andere Querschnitte aufweisen, z.B. eine vollständig geschlossenen Querschnitt. Auch kann der Schwingungsdämpfer 7 einen U-förmigen, ovalen kreisringförmigen Querschnitt haben. Vorteilhaft ist auch, wenn das Hohlprofil auf seiner Längsseite zumindest zum Teil offen ist, also den gegenüber dem Messerrücken 1 frei schwingfähigen Schenkel 72 aufweist, da dieser die Schwingungen besonders gut dämpfen kann.

Wie in Fig. 1 und 2 gut erkennbar, dient der Schwingungsdämpfer 7 vorteilhaft auch als Kabelkanal für die Versorgungsleitungen 6. Hierzu weist der Schwingungsdämpfer 7 an seinem in Fig. 1 und 2 oberen, antriebsseitigen Ende des Schneidwerks eine Ausnehmung 11 auf, durch die die Versorgungsleitungen 6 vom Hydromotor 5 kommend in den vom Schwingungsdämpfer 7 umgebenen Hohlraum geführt werden. Dort werden die Versorgungsleitungen 6 bis zur Anschlussstelle 9 geführt, von wo sie über eine Durchgangsöffnung im Schwingungsdämpfer 7 in das Tragrohr 10 gelangen. Weiter verlaufen die Versorgungsleitungen 6 geschützt im Tragrohr 10 zu nicht gezeigten Versorgungsanschlüssen der Erntemaschine. Der als Kabelkanal ausgebildete Schwingungsdämpfer 7, ggf. in Kombination mit dem ebenfalls als Kabelkanal ausgebildeten Tragrohr 10, schützt die Versorgungsleitungen 6 vor Beschädigung und Abriss, beispielsweise verursacht durch am Schneidwerk vorbeilaufendes Schnittgut.

Um die Schwingungen weiter dämpfen und den Verschleiß der Schneidmesser 2, 3 und der von diesen berührten weiteren Teile des Schneidwerks weiter verringern zu können, sind die Schneidmesser 2, 3 vorzugsweise auf die in Fig. 3 gezeigte Weise längsbeweglich am Messerrücken 1 gelagert. Über die Länge des Messerrückens 1 sind mehrere Messerhalter 12, 12', 12" usw. angebracht, deren Ausbildung und Funktion anhand des Messerhalters 12 exemplarisch erläutert wird.

Der Messerhalter 12 weist ein gestuftes Klemmblech 13 auf, welches mittels zweier Klemmverschraubungen 14 am Messerrücken 1 angeschlagen ist. Zwischen Klemmblech 13 und Messerrücken 1 ist ein Kippblech 15 gelegt. Im Stufenbereich eines stufenförmig abgewinkelten Bereichs des Messerrückens 1 reicht eine Spannverschraubung 16 durch Bohrungen in Klemmblech 13 und Messerrücken 1. Mit der Spannverschraubung 16 kann vorteilhaft ein Führungsbereich des Klemmblechs 13 für das obere Schneidmesser 2 in Richtung eines korrespondieren ausgebildeten Führungsbereichs des Messerrückens 1 für das untere Schneidmesser 3 definiert gespannt werden kann. An diesem vorderen Ende des Klemmblechs 13 ist eine Durchgangsbohrung 17 vorgesehen, in die ein kreisringförmiger Ansatz 18 einer Kunststoffführung 19 eingesteckt ist. Die Kunststoffführung 19 dient vorteilhaft als Gleitführung für eine Messerleiste 20 des oberen Schneidmessers 2. Entsprechend sind in den Zeichnungen nicht erkennbare Kunststoffführungen zur Gleitführung einer Messerleiste 21 des unteren Schneidmessers 3 am Messerrücken 1 angebracht.

## Patentansprüche

1. Schneidwerk für eine Erntemaschine mit einem länglichen Messerrücken (1), mindestens einem daran angeordnetem Schneidmesser (2; 3) und einem Befestigungselement (10) zur Befestigung des Messerrückens (1) an einer Erntemaschine, wobei zwischen Messerrücken (1) und Befestigungselement (10) ein Schwingungsdämpfer (7) vorgesehen ist, **dadurch gekennzeichnet, dass** der Schwingungsdämpfer (7) aus einem länglichen, im wesentlichen parallel zum Messerrücken (1) verlaufenden Hohlprofil besteht, wobei das Hohlprofil zumindest bereichsweise längsseitig offen ist.

2. Schneidwerk nach Anspruch 1, **dadurch gekennzeichnet, dass** der Messerrücken (1) und der Schwingungsdämpfer (7) einteilig ausgebildet sind.

3. Schneidwerk nach Anspruch 1 oder 2, **dadurch gekennzeichnet, dass** das Hohlprofil einen polygonalen, ovalen oder kreisringförmigen Querschnitt hat.

4. Schneidwerk nach Anspruch 1, 2 oder 3, **dadurch gekennzeichnet, dass** das Hohlprofil einen C-formigen oder U-förmigen Querschnitt hat.

5. Schneidwerk nach einem der Ansprüche 1 bis 4, **dadurch gekennzeichnet, dass** das Hohlprofil einen ersten Schenkel (71) und einen zweiten Schenkel (72) aufweist, wobei nur einer der Schenkel (71) mit dem Messerrücken (1) verbunden ist.

6. Schneidwerk nach Anspruch 5, **dadurch gekennzeichnet, dass** der andere, nicht mit dem Messerrücken (1) verbundene Schenkel (72) frei schwingend ist.

7. Schneidwerk nach einem der voranstehenden Ansprüche, **dadurch gekennzeichnet, dass** der gemeinsame Querschnitt von Messerrücken (1) und Schwingungsdämpfer (7) im wesentlichen die Form eines Fragezeichens hat.

8. Schneidwerk nach einem der voranstehenden Ansprüche, **dadurch gekennzeichnet, dass** das Hohlprofil eine Vielzahl von in Längsrichtung (L) des Messerrückens verlaufende Längskanten (8) aufweist.

9. Schneidwerk nach einem der voranstehenden Ansprüche, **dadurch gekennzeichnet, dass** das Befestigungselement ein Tragrohr (10) ist.

10. Schneidwerk nach einem der voranstehenden Ansprüche, **dadurch gekennzeichnet, dass** der Schwingungsdämpfer (7) als Kabelkanal zur Aufnahme von Versorgungsleitungen (6) eines am Schneidwerk angebrachten Messerantriebs (5) ausgebildet ist.

11. Schneidwerk nach einem der voranstehenden Ansprüche, **dadurch gekennzeichnet, dass** über die Länge des Messerrückens (1) mehrere Messerhalter (12, 12', 12") angebracht sind, wobei der Messerrücken (1) einen stufenförmig abgewinkelten Bereich und die daran angebrachten Messerhalter (12, 12', 12") am Messerrücken (1) angeschlagene gegenläufig gestufte Klemmbleche (13) aufweisen.

12. Schneidwerk nach Anspruch 11, **dadurch gekennzeichnet, dass** zur definierten Spannung der Schneidmesser (2, 3) gegeneinander jeweils eine durch eine Bohrung im Klemmblech (13) und Messerrücken (1) reichende Spannverschraubung (16) vorgesehen ist.

13. Schneidwerk nach Anspruch 11 oder 12, **dadurch gekennzeichnet, dass** am vorderen Ende der Klemmbleche (13) jeweils eine Kunststoffführung (19) als Gleitführung für eine Messerleiste (20) des oberen Schneidmessers (2) und/oder am Messerrücken (1) Kunststoffführungen als Gleitführung für eine Messerleiste (21) des unteren Schneidmessers (3) angebracht sind.

## Claims

1. Cutting mechanism for a harvesting machine with an elongated cutter supporting rail (1), at least one cutter blade (2; 3) arranged thereon and a fastening element (10) for fastening the cutter supporting rail (1) to a harvesting machine, wherein a vibration damper (7) is provided between the cutter supporting rail (1) and the fastening element (10), **characterised in that** the vibration damper (7) consists of an elongated hollow profile running essentially parallel to the cutter supporting rail (1), the hollow profile being open on the long side at least in regions.

2. Cutting mechanism according to claim 1, **characterised in that** the cutter supporting rail (1) and the vibration damper (7) are formed in one piece.

3. Cutting mechanism according to claim 1 or 2, **characterised in that** the hollow profile has a polygonal, oval or circular cross-section.

4. Cutting mechanism according to claim 1, 2 or 3, **characterised in that** the hollow profile has a C-shaped or U-shaped cross-section.

5. Cutting mechanism, according to one of claims 1 to 4, **characterised in that** the hollow profile exhibits a first limb (71) and a second limb (72), only one of the limbs (71) being connected to the cutter supporting rail (1).

6. Cutting mechanism according to claim 5, **characterised in that** the other limb (72) not connected to the cutter supporting rail (1) is free to vibrate.

7. Cutting mechanism according to one of the preceding claims, **characterised in that** the joint cross-section of the cutter supporting rail (1) and the vibration damper (7) is essentially the shape of a question mark.

8. Cutting mechanism according to one of the preceding claims, **characterised in that** the hollow profile exhibits a multiplicity of longitudinal edges (8) running in the longitudinal direction (L) of the cutter supporting rail.

9. Cutting mechanism according to one of the preceding claims, **characterised in that** the fastening element is a carrier tube (10).

10. Cutting mechanism according to one of the preceding claims, **characterised in that** the vibration damper (7) is embodied as a cable channel for accommodating supply lines (6) of a cutter drive (5) attached to the cutting mechanism.

11. Cutting mechanism according to one of the preceding claims, **characterised in that** a plurality of cutter holders (12, 12', 12") are attached over the length of the cutter supporting rail (1), the cutter supporting rail (I) exhibiting a step-shaped angled region and the cutter holders (12, 12', 12") attached thereto exhibiting stepped clamping plates (13) running in the opposite direction attached to the cutter supporting rail (1).

12. Cutting mechanism according to claim 11, **characterised in that** in each case a clamping bolt (16) is provided extending through a bore in the clamping plate (13) and the cutter supporting rail (1) to ensure the defined tension between the cutter blades (2, 3).

13. Cutting mechanism according to claim 11 or 12, **characterised in that** in each case a plastic guide (19) is attached at the front end of the clamping plates (13) to provide sliding guidance for a cutter bar (20) of the upper cutter blade (2) and/or plastic guides are attached to the cutter supporting rail (1) to provide sliding guidance for a cutter bar (21) of the lower cutter blade (3).

## Revendications

1. Barre de coupe pour une moissonneuse avec une tringle de lame (1) oblongue, au moins une lame de coupe (2 ; 3) disposée dessus et un élément de fixation (10) pour la fixation de la tringle de lame (1) sur une moissonneuse, un amortisseur d'oscillations (7) étant prévu entre la tringle de lame (1) et l'élément de fixation (10), **caractérisée en ce que** l'amortisseur d'oscillations (7) se compose d'un profilé creux oblong s'étendant sensiblement parallèlement à la tringle de lame (1), le profilé creux étant au moins par endroits ouvert sur la longueur.

2. Barre de coupe selon la revendication 1, **caractérisée en ce que** la tringle de lame (1) et l'amortisseur d'oscillations (7) sont réalisés d'un seul tenant.

3. Barre de coupe selon la revendication 1 ou 2, **caractérisée en ce que** le profilé creux possède une section transversale polygonale, ovale ou annulaire et circulaire.

4. Barre de coupe selon la revendication 1, 2 ou 3, **caractérisée en ce que** le profilé creux possède une section transversale en C ou U.

5. Barre de coupe selon l'une quelconque des revendications 1 à 4, **caractérisée en ce que** le profilé creux présente une première branche (71) et une seconde branche (72), seule l'une des branches (71) étant reliée à la tringle de lame (1).

6. Barre de coupe selon la revendication 5, **caractérisée en ce que** l'autre branche (72) qui n'est pas reliée à la tringle de lame (1) est à libre oscillation.

7. Barre de coupe selon l'une quelconque des revendications précédentes, **caractérisée en ce que** la section transversale commune de la tringle de lame (1) et de l'amortisseur d'oscillations (7) présente sensiblement la forme d'un point d'interrogation.

8. Barre de coupe selon l'une quelconque des revendications précédentes, **caractérisée en ce que** le profilé creux présente une pluralité d'arêtes longitudinales (8) s'étendant dans le sens longitudinal (L) de la tringle de lame.

9. Barre de coupe selon l'une quelconque des revendications précédentes, **caractérisée en ce que** l'élément de fixation est un tube porteur (10).

10. Barre de coupe selon l'une quelconque des revendications précédentes, **caractérisée en ce que** l'amortisseur d'oscillations (7) est réalisé comme un canal câblé pour la réception de câbles d'alimentation (6) d'un entraînement de lame (5) monté sur la barre de coupe.

11. Barre de coupe selon l'une quelconque des revendications précédentes, **caractérisée en ce que** plusieurs supports de lame (12, 12', 12'') sont montés sur la longueur de la tringle de lame (1), la tringle de lame (1) présentant une zone coudée de manière étagée et les supports de lame montés dessus (12, 12', 12'') présentant des tôles de serrage (13) étagées en sens contraire butant contre la tringle de lame (1).

12. Barre de coupe selon la revendication 11, **caractérisée en ce que**, respectivement, un vissage de serrage (16) parvenant par un perçage dans la tôle de serrage (13) et la tringle de lame (1) est prévu pour le serrage défini des lames de coupe (2, 3) l'une contre l'autre.

13. Barre de coupe selon la revendication 11 ou 12, **caractérisée en ce que**, respectivement, un guidage plastique (19) est monté sur l'extrémité avant des tôles de serrage (13) en guise de guidage coulissant pour une barre à lame (20) de la lame de coupe supérieure (2) et/ou des guidages plastiques sont montés sur la tringle de lame (1) en guise de guidage coulissant pour une barre à lame (21) de la lame de coupe (3) inférieure.
